# EUROPEAN PATENT SPECIFICATION

(11) **EP 3 636 399 B1**
(45) Date of publication and mention of the grant of the patent: **19.03.2025**
(21) Application number: 18813372.2
(22) Date of filing: 05.06.2018
(51) Int. Cl.: B25J 17/00, B25J 9/00, B25J 17/02, B25J 9/04, B25J 9/06, B25J 9/10

(54) **WRIST OF ROBOT ARM, AND DUAL ARM ROBOT**
HANDGELENK EINES ROBOTERARMS UND DOPPELARMROBOTER
POIGNET DE BRAS DE ROBOT, ET ROBOT À BRAS DOUBLE

(30) Priority: 09.06.2017 JP 2017114708
(43) Date of publication of application: 15.04.2020
(73) Proprietor: Kawasaki Jukogyo Kabushiki Kaisha, Kobe-shi, Hyogo 650-8670 (JP)
(72) Inventor: HASHIMOTO, Yasuhiko, Kobe-shi, Hyogo 650-8670 (JP); TAMADA, Souichi, Kobe-shi, Hyogo 650-8670 (JP); MURAKAMI, Junichi, Kobe-shi, Hyogo 650-8670 (JP); HANEDA, Akihiro, Kobe-shi, Hyogo 650-8670 (JP)
(74) Representative: Müller-Boré & Partner Patentanwälte PartG mbB
(86) International application number: PCT/JP2018/021541
(87) International publication number: WO 2018/225722

(56) References cited:
- WO-A1-2016/103302
- JP-A- 2002 086 374
- JP-A- 2002 273 681
- JP-A- H0 671 577
- JP-A- H07 276 271
- JP-A- S6 096 364

## Description

### Technical Field

The present invention relates to a structure of a wrist for connecting a robot arm and an end effector, and to a structure of a dual arm robot provided with the wrists.

### Background Art

Conventionally, a dual arm robot including two horizontal articulated robot arms is known. Patent Literature 1 discloses this type of dual arm robot.

The dual arm robot of Patent Literature 1 includes two horizontal articulated robot arms, specifically, an upper arm and a lower arm. A pivot shaft at a proximal end of the upper arm and a pivot shaft at a proximal end of the lower arm are arranged vertically. In this dual arm robot, an action axis is provided at the distal end of each arm, and this action axis can be moved in the vertical direction with respect to the arm by a ball screw mechanism.

Generally, an end effector is attached to the distal end of the robot arm via a wrist, and the robot performs an operation with the end effector. For vertical movement of the end effector, there are known a robot that is provided with a lift shaft at a proximal end of an arm and integrally moves the arm and an end effector up and down with this lift shaft, and a robot that is provided with a lift shaft at a distal end of an arm and moves an end effector up and down with respect to the arm with this lift shaft. As in Patent Literature 1, in the robot in which the proximal ends of the two arms are arranged side by side in the vertical direction, it is difficult to move the proximal ends of the arms up and down, and therefore, the latter is adopted.

As a lift shaft provided at the distal end of the arm, there are known, for example, a ball screw mechanism disclosed in Patent Literature 1 and a linear motion mechanism including a rail and a slide are known. On the other hand, Patent Literature 2 and Patent Literature 3 propose a link wrist having a function of moving the end effector up and down with respect to the distal end of the arm.

The wrist (wrist device) of Patent Literature 2 includes a first wrist link (first wrist arm) that rotates about a first rotary axis located at the distal end of the arm, and a second wrist link (second wrist arm) that rotates about a second rotary axis located at the distal end of the first wrist link, and a holding portion for an end effector (hand) is provided on the second wrist link. This wrist device has a relationship between the first wrist link and the second wrist link such that the action point of the end effector moves on the same straight line while changing the posture of the end effector.

The transfer robot of Patent Literature 3 includes an arm, a rotating body rotatably supported on a distal end of an arm, a four-bar link mechanism including first to third links, a rotating member rotatably supported on the third link, and an end effector connected to the rotating member. This transfer robot has a link ratio of a four-bar link mechanism in which the action point of the end effector moves while maintaining the posture on the same straight line.

Patent document JP H06 71577 A, according to its abstract, relates to a small sized transport device. The X-axis arm and Y-axis arm, which are connected each other and turn in a horizontal plane, are arranged on a device body, and a robot arm is installed on the Y-axis arm. Further, the X-axis arm is extended in the traveling direction of a transport device, and the Y-axis arm is turned for the X-axis arm, and a tool supported on the robot arm is positioned directly under a device body, and then the center of gravity of the tool and the center of gravity of the body coincide with each other.

Patent document JP S60 96364 A, according to its abstract, relates to a robot for gas cutting supports a slave robot for three-dimensional positioning having three degrees of freedom to a movable member, for example, a rotating body, of a master robot for three-dimensional positioning having four degrees of freedom. The master and slave robots are provided respectively with electromagnets and torches for gas cutting as an end effector. The above-described degrees of freedom are controlled by a control device. A work can be cut by the torch of the slave robot and the cut part can be taken out and ejected by the electromagnet of the master robot.

Patent document JP 2002 273681 A, according to its abstract, relates to an industrial robot that has a link mechanism consisting of a first link and a second link, wherein the base end of the first link is attached to an elevating/sinking shaft, and the second link is attached rotatably to the tip of the first link, and a holder whereon any object(s) to be transported is placed is attached rotatably to the tip of the second link. The first link is rotated around the first axis of the shaft by a servo motor installed at the base end of the first link. The first link is furnished with a first follower rotating means having a shaft and bevel gear, and the rotation of the first link is transmitted to the second link at the tip, and the second link is put in following rotation in synchronization with the first link.

### Citation List

### Patent Literature

PTL 1: JP H07-276271 A
PTL 2: JP H06-5106 Y
PTL 3: JP H05-301181 A

### Summary of Invention

### Technical Problem

As in Patent Literature 1, in the robot including the lift shaft that moves the end effector up and down with respect to the arm, the vertical dimension of the lifting mechanism including the lift shaft provided at the distal end of the arm is larger than the lifting width of the end effector with respect to the arm. Such a robot is not suitable, for example, for an operation performed by inserting an arm distal end including an end effector and a lifting device into a space with a narrow vertical width.

Therefore, as in Patent Literature 2 and Patent Literature 3, it is conceivable to provide the robot with a wrist that includes a plurality of links linked to one another and has a function of moving the end effector up and down with respect to the distal end of the arm. However, in the technology of Patent Literature 2, when the end effector is moved up and down with respect to the distal end of the arm, the posture of the end effector changes. In the technique of Patent Literature 3, the end effector can be moved up and down with respect to the distal end of the arm while maintaining the posture of the end effector, but in order to form a four-bar link, it is difficult to suppress the vertical dimension of the wrist.

The present invention has been made in view of the above circumstances, and has an object to provide a robot that can extend a movement range of an end effector with respect to an arm in a direction orthogonal to a predetermine plane on which a distal end of the arm moves while suppressing the dimension in the direction orthogonal to the predetermined plane as compared to the conventional robot including the lift shaft at the distal end of the robot arm.

### Solution to Problem

The present invention is a dual arm robot as defined in claim 1.

In the dual arm robot according to the present invention, the position of the third wrist axis in the direction orthogonal to a predetermined plane on which the distal end of the robot arm (hereinafter referred to as the "Z direction") moves in the same manner as the position in the Z direction of the distal end side connecting body connected to the end effector. The third wrist axis moves on a straight line that passes through the first wrist axis and extends in the Z direction. The movement range of the third wrist axis in the Z direction is at most four times the distance from the first wrist axis to the second wrist axis. The link widths of the first wrist link and the second wrist link (dimensions in the direction orthogonal to the link lengths) can be easily made smaller by design than the dimensions
in the direction parallel to the axial center of the lifting shaft provided at the distal end of the conventional robot arm.

Therefore, in the wrist of the robot arm having the above-described configuration and the dual arm robot including the wrists, it is possible to easily realize extension of the movement range of the end effector with respect to the arm in the Z direction while suppressing the dimension in the Z axis direction as compared to the conventional robot including the lifting shaft at the distal end of the robot arm.

### Advantageous Effects of Invention

According to the present invention, it is possible to provide the robot that can extend the movement range of the end effector with respect to the arm in the direction orthogonal to the predetermine plane on which the distal end of the arm moves while suppressing the dimension in the direction orthogonal to the predetermined plane as compared to the conventional robot including the lift shaft at the distal end of the robot arm.

### Brief Description of Drawings

Fig. 1 is a schematic front view of a dual arm robot according to an embodiment of the present invention.
Fig. 2 is a schematic plan view of the dual arm robot shown in Fig. 1.
Fig. 3 is a front view showing a schematic configuration of a wrist.
Fig. 4 is a schematic view of the IV-IV cross section in Fig. 3.
Fig. 5 is a schematic view of the V-V cross section in Fig. 3.
Fig. 6A is a view showing a manner of attaching a flexible hose.
Fig. 6B is a view showing a manner of attaching the flexible hose.
Fig. 7 is a diagram for explaining an operation of the wrist.
Fig. 8 is a view showing a movement range of an end effector with respect to an arm in the Z direction by the wrist.
Fig. 9 is a view showing a transformation example of the wrist in the dual arm robot.
Fig. 10 is a view showing a transformation example of the wrist in the dual arm robot.
Fig. 11 is a view showing a transformation example of the wrist in the dual arm robot.
Fig. 12 is a diagram showing a configuration of a control system of the dual arm robot.
Figs. 13 are views for explaining advantages of the wrist according to the embodiment with respect to a wrist including a rail-type linear motion device.
Figs. 14 are views for explaining advantages of the wrist according to the embodiment with respect to a wrist including the rail-type linear motion device.
Fig. 15 is a front view showing a schematic configuration of a wrist according to a modification.
Fig. 16 is a schematic view of the XVI-XVI cross section in Fig. 15.

### Description of Embodiments

Next, embodiments of the present invention will be described with reference to the drawings.

### [Schematic configuration of dual arm robot]

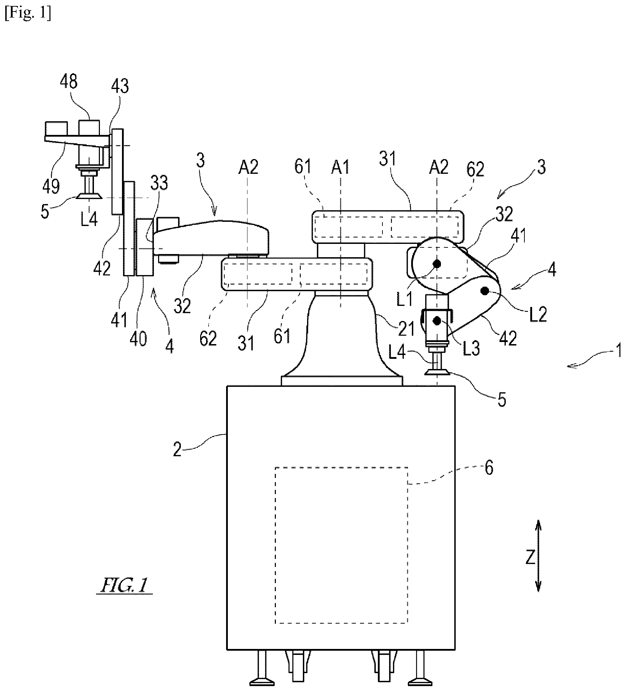

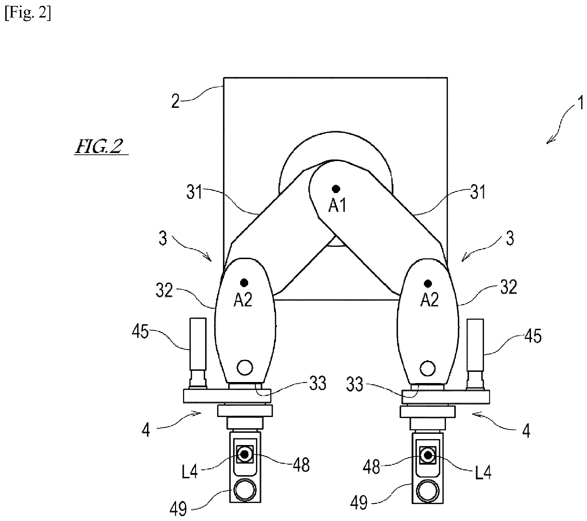

Fig. 1 is a schematic front view of a dual arm robot 1, and Fig. 2 is a schematic plan view of the dual arm robot 1. As shown in Figs. 1 and 2, the dual arm robot 1 according to an embodiment of the present invention includes a base 2, two robot arms (hereinafter simply referred to as "arms 3") supported by the base 2, an end effector 5 connected to the distal end of each arm 3, a wrist 4 provided between the arm 3 and the end effector 5, and a controller 6 that controls an operation of the dual arm robot 1.

### [Structure of arm 3]

The arms 3 are each an articulated robot arm configured such that the distal end moves within a predetermined plane. An example of such a robot arm is a horizontal articulated robot arm. Hereinafter, the direction orthogonal to the plane in which the distal ends of the arms 3 move will be described as the "Z direction". The two arms 3 have substantially the same configuration. Hereinafter, the configuration of one arm 3 will be described, and the description of the configuration of the other arm 3 will be omitted.

The arm 3 includes a first link 31 and a second link 32 linked in order from the proximal end side.

A proximal end of the first link 31 is supported by a base shaft 21 erected on the base 2 so as to be rotatable (pivotable). A first axis A1 extending in the Z direction is defined at the axial center of the base shaft 21. In the first link 31, a first rotation drive device 61 that causes the first link 31 to rotate with respect to the base shaft 21 is provided. The first rotation drive device 61 is constituted by, for example, a gear mechanism including a motor and a speed reducer (all not shown).

A second axis A2 extending in the Z direction is defined at the distal end of the first link 31. The distal end of the second link 32 is coupled to the distal end of the first link 31 so as to be rotatable about the second axis A2. In one arm 3 of the two arms 3, the second link 32 is coupled below the first link 31 on the drawing sheet of Fig. 1, and in the other arm 3, the second link 32 is coupled above the first link 31 on the drawing sheet of Fig. 1.

In the first link 31, a second rotation drive device 62 that causes the second link 32 to rotate with respect to the first link 31 is provided. The second rotation drive device 62 is constituted by, for example, a gear mechanism including a motor and a speed reducer (all not shown). A wrist connecting portion 33 to which the wrist 4 is connected is provided at the distal end of the second link 32.

The proximal ends of the first links 31 of the two arms 3 are arranged side by side in the Z direction, and the first links 31 of the two arms 3 rotate about the first axis A1. Then, in order to cancel the difference in the positions in the Z direction of the proximal ends of the first links 31 of the two arms 3, in one arm 3, the second link 32 is arranged on one side of the first link 31 in the Z direction, and in the other arm 3, the second link 32 is arranged on the other side of the first link 31 in the Z direction. Thus, the positions of the wrist connecting portions 33 provided at the distal ends of the second links 32 of the two arms 3 in the Z direction are substantially the same, and the distal ends of the two arms 3 move in substantially the same plane.

### [Structure of wrist 4]

The wrist 4 has a function of connecting the arm 3 and the end effector 5 and moving the end effector 5 in the Z direction with respect to the arm 3.

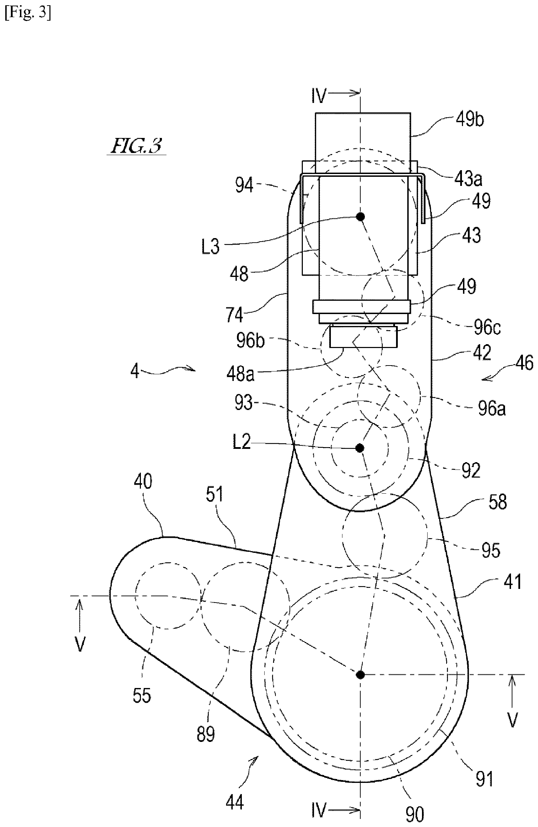

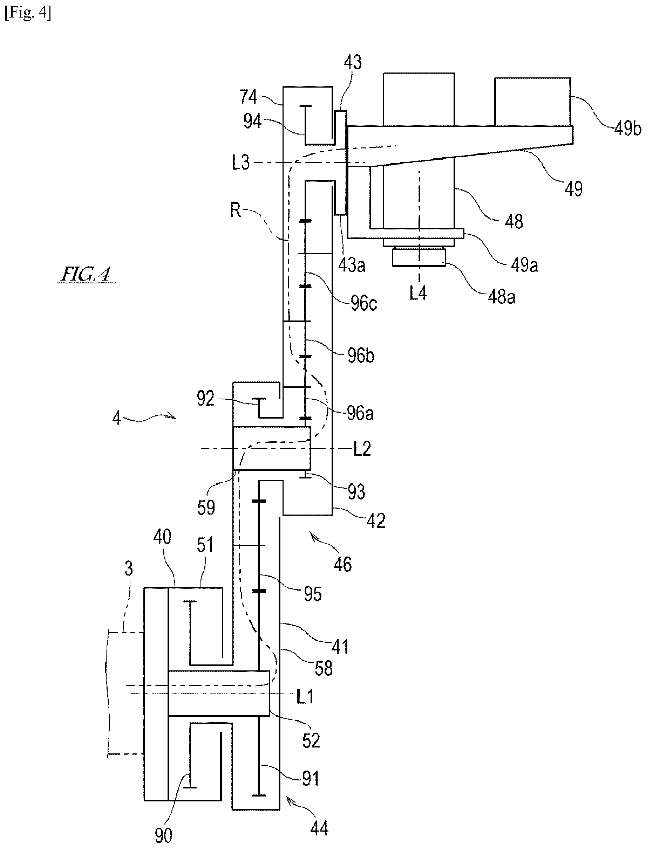

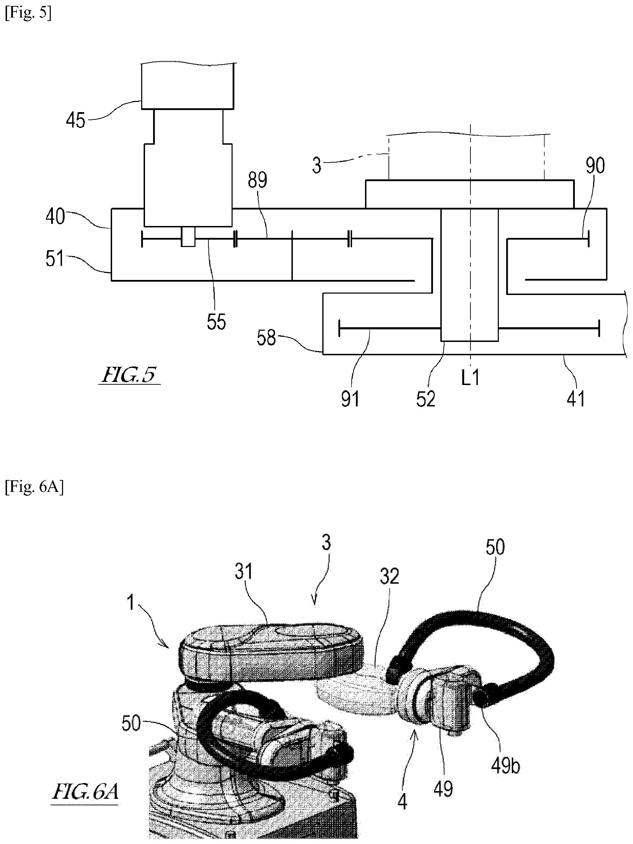

Fig. 3 is a front view showing a schematic configuration of the wrist 4 according to the first embodiment, Fig. 4 is a schematic view of the IV-IV section in Fig. 3, and Fig. 5 is a schematic view of the V-V section in Fig. 3. As shown in Figs. 1 to 3, the wrist 4 includes a proximal end side connecting body 40 connected to the distal end of the arm 3, a first wrist link 41, a second wrist link 42, a distal end side connecting body 43, and a wrist drive device 44. The wrist 4 according to the present embodiment further includes a motor 48 that is held by the distal end side connecting body 43 and constitutes a fourth wrist axis L4. The output shaft of the motor 48 has the fourth wrist axis L4 defined at its axial center. The output from the output shaft of the motor 48 is transmitted to an interface 48a to which the end effector 5 is connected via a gear mechanism (not shown) including a speed reducer. However, the end effector 5 may be directly connected to the distal end side connecting body 43.

The first wrist link 41 is coupled to the proximal end side connecting body 40 so as to be rotatable about a first wrist axis L1 defined in the proximal end side connecting body 40. The second wrist link 42 is coupled to the first wrist link 41 so as to be rotatable about a second wrist axis L2 defined in the first wrist link 41. The distal end side connecting body 43 is coupled to the second wrist link 42 so as to be rotatable about a third wrist axis L3 defined in the second wrist link 42. The first link length that is a distance between the first wrist axis L1 and the second wrist axis L2 is substantially equal to the second link length that is a distance between the second wrist axis L2 and the third wrist axis L3. A bracket 49 is coupled to the distal end side connecting body 43. The bracket 49 is provided with a motor holding portion 49a that holds the motor 48 and a hose receiver 49b to which an end of a flexible hose 50 described later is connected.

The extending directions of the first wrist axis L1, the second wrist axis L2, and the third wrist axis L3 are parallel to the plane on which the distal end of the arm 3 moves, in other words, orthogonal to the Z direction. The extending direction of the fourth wrist axis L4 is parallel to the Z direction.

The wrist drive device 44 includes an interlock device 46 that interlocks the second wrist link 42 and the distal end side connecting body 43 with the rotation of the first wrist link 41. In the present embodiment, the interlock device 46 is constituted by casings 58 and 74 that form the outer shapes of the respective wrist links 41 and 42, gear trains formed inside the casings 58 and 74, and the like. Hereinafter, the interlock device 46 will be described in detail.

The proximal end side connecting body 40 includes a casing 51 that is fixed to the wrist connecting portion 33 of the second link 32. As shown in detail in Fig. 5, a motor 45 is attached to the casing 51. In addition, a first rotation shaft 52 having the first wrist axis L1 as an axial center is fixed to the casing 51. The motor 45 is located below the second link 32 when the second link 32 is connected below the first link 31, and is located above the second link when the second link 32 is connected above the first link 31. Thereby, the straight line connecting the first rotation shaft 52 and the output shaft of the motor 45 is inclined upward or downward from the horizontal.

The output from the output shaft of the motor 45 is transmitted to a drive gear 55 provided in the casing 51 via a gear mechanism (not shown) including a speed reducer. The rotational power of the drive gear 55 is transmitted to an input gear 90 via an intermediate gear 89 meshing with the drive gear 55 and the input gear 90.

As shown in Fig. 4, a boss of the input gear 90 is rotatably supported on the casing 51. The casing 58 of the first wrist link 41 is fixed to the boss of the input gear 90. A second rotation shaft 59 having the second wrist axis L2 as an axial center is fixed to the casing 58.

A first gear 91 is fixed to the first rotation shaft 52 in the casing 58. In the casing 58, a second gear 92 is fixed to the second rotation shaft 59. In the casing 58, an intermediate gear 95 that meshes with the first gear 91 and the second gear 92 and transmits rotational power therebetween is provided.

The boss of the second gear 92 is rotatably supported on the second rotation shaft 59, and the casing 74 of the second wrist link 42 is fixed to the boss of the second gear 92. The distal end side connecting body 43 is supported at the distal end of the casing 74 of the second wrist link 42 so as to be rotatable about the third wrist axis L3.

In the casing 74, a third gear 93 is fixed to the second rotation shaft 59. In the casing 74, a fourth gear 94 is fixed to the distal end side connecting body 43. In the casing 74, three intermediate gears 96a, 96b, and 96c that transmit rotational power from the third gear 93 to the fourth gear 94 are provided. Thus, the wrist 4 is configured with a gear train that continues from the drive gear 55 to the fourth gear 94.

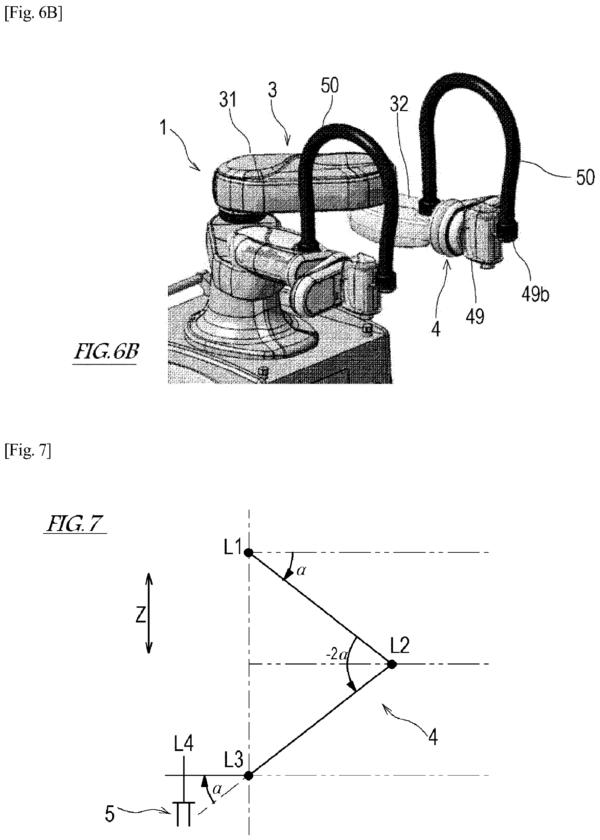

Wiring and piping extending from the arm 3 to the motor 48 and the end effector 5 are passed through a flexible hose 50 whose proximal end is coupled to the distal end of the arm 3 and whose distal end is coupled to the hose receiver 49b of the bracket 49. For example, as shown in Fig. 6A, the flexible hose 50 is attached so as to have a half-loop shape that bends sideward when viewed from the front of the dual arm robot 1. This attachment mode of the flexible hose 50 is advantageous in that the dimension in the height direction can be suppressed. Further, for example, as shown in Fig. 6B, the flexible hose 50 is attached so as to have a half loop shape that bends upward. This attachment mode of the flexible hose 50 is advantageous in that twisting of the flexible hose 50 can be suppressed.

Note that wiring and piping extending from the arm 3 to the motor 48 and the end effector 5 may be passed through the wrist 4. In Fig. 4, a route R of piping and wiring passing through the casings 51, 58, and 74 of the wrist 4 is indicated by a two-dot chain line.

In the wrist 4 having the above configuration, when the drive gear 55 is rotationally driven by the output of the motor 45, the rotational power is transmitted to the input gear 90, and the first wrist link 41 including the input gear 90 and the casing 58 rotates about the first wrist axis L1. Then, when the first wrist link 41 rotates about the first wrist axis L1, the second rotation shaft 59 revolves around the first wrist axis L1. As the second rotation shaft 59 revolves, the intermediate gear 95 and the second gear 92 rotate, and the second wrist link 42 including the second gear 92 and the casing 74 rotates about the second wrist axis L2. Further, when the second wrist link 42 rotates about the second wrist axis L2, the distal end side connecting body 43 revolves around the second wrist axis L2. As the distal end side connecting body 43 revolves, the intermediate gears 96a and 96b and the fourth gear 94 rotate, and the distal end side connecting body 43 including the fourth gear 94 rotates about the third wrist axis L3.

Then, referring to Fig. 7, the gear ratio of each gear is determined so that the third wrist axis L3 moves on the straight line in the Z direction passing through the first wrist axis L1, in other words, when the first wrist link 41 rotates by α° about the first wrist axis L1 from the folded state, the second wrist link 42 rotates by -2α° about the second wrist axis L2, and the distal end side connecting body 43 rotates by α° about the third wrist axis L3.

Fig. 7 is a diagram for explaining the operation of the wrist 4 obtained by rotating the first wrist link 41 from the folded state by α° about the first wrist axis L1. In the wrist 4 in the folded state, the longitudinal directions of the first wrist link 41 and the second wrist link 42 are horizontal, and the first wrist axis L1 and the third wrist axis L3 overlap each other. As shown in Fig. 7, when the first wrist link 41 is rotated by α° about the first wrist axis L1 from the wrist 4 in the folded state, the second wrist link 42 rotates by -2α° about the second wrist axis L2 from the folded state, and the distal end side connecting body 43 rotates by α° about the third wrist axis L3 from the folded state. Note that α is an arbitrary number.

According to the wrist 4 operating in this way, the third wrist axis L3 moves on a straight line parallel to the Z direction passing through the first wrist axis L1, and the posture of the end effector 5 connected to the distal end side connecting body 43 directly or via the fourth wrist axis L4 is held constant regardless of the position of the third wrist axis L3 in the Z direction.

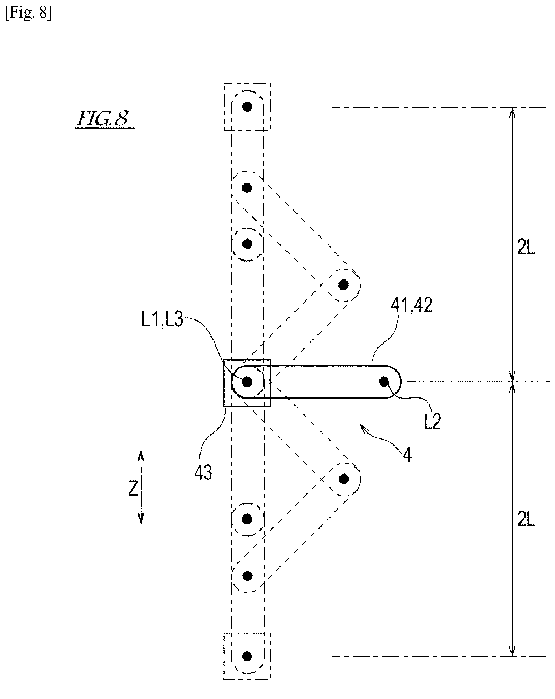

Fig. 8 shows a movement range of the end effector 5 with respect to the arm 3 in the Z direction by the wrist 4 having the above-described configuration. When the first link length and the second link length of the wrist 4 are L, the reach range of the third wrist axis L3 at the same level as the distal end side connecting body 43 to which the end effector 5 is connected is 4L which is obtained by adding 2L from the first wrist axis L1 at the same level as the second link 32 of the arm 3 to one side in the Z direction and 2L from the first wrist axis L1 to the other side in the Z direction. The first link length is a distance between the first wrist axis L1 and the second wrist axis L2, and the second link length is a distance between the second wrist axis L2 and the third wrist axis L3.

The dimension of the folded wrist 4 in the Z direction is a dimension of the first wrist link 41 or the second wrist link 42 in the link width direction. The link width direction is a direction orthogonal to the link length. The dimension of the first wrist link 41 or the second wrist link 42 in the link width direction can be easily designed to be small by suppressing the diameter of the first gear 91 or the fourth gear 94 in the interlock device 46 of the present embodiment. In order to increase the movement range of the end effector 5 with respect to the arm 3 in the Z direction and suppress the dimension of the first wrist link 41 or the second wrist link 42 in the link width direction, the first wrist link 41 or the second wrist link 42 is elongated in the link length direction.

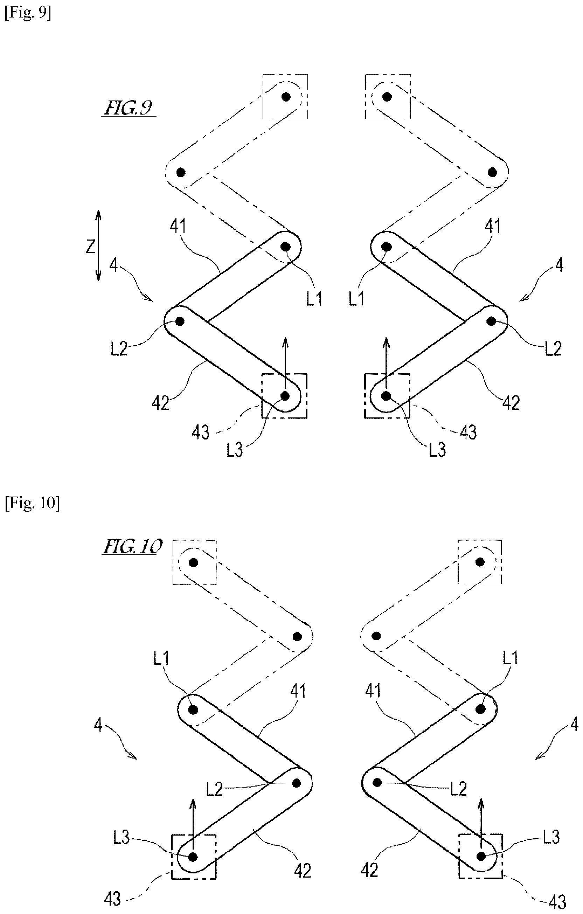

The first wrist link 41 of the wrist 4 having the above-described configuration can rotate 360° in the forward direction and the reverse direction about the first wrist axis L1. Figs. 9 to 11 show transformation examples of the wrist 4 having the above-described configuration.

For example, as shown in Fig. 9, when the dual arm robot 1 is viewed from the front, the pair of wrists 4 can have a mode in which the first wrist axes L1 of both the wrists 4 are located between the second wrist axes L2 of both the wrists 4. Such a mode is advantageous in that a self-interference can be easily avoided even when both the end effectors 5 are brought close to each other in a scene where a small member is moved with the two arms or a scene where the small member is operated with the two arms.

Further, for example, as shown in Fig. 10, when the dual arm robot 1 is viewed from the front, the pair of wrists 4 can have a mode in which the second wrist axes L2 of both the wrists 4 are located between the first wrist axes L1 of both the wrists 4. Such a mode is advantageous in that the amount of protrusion of the wrists 4 to the side can be suppressed in a scene where a wide member is moved with two arms.

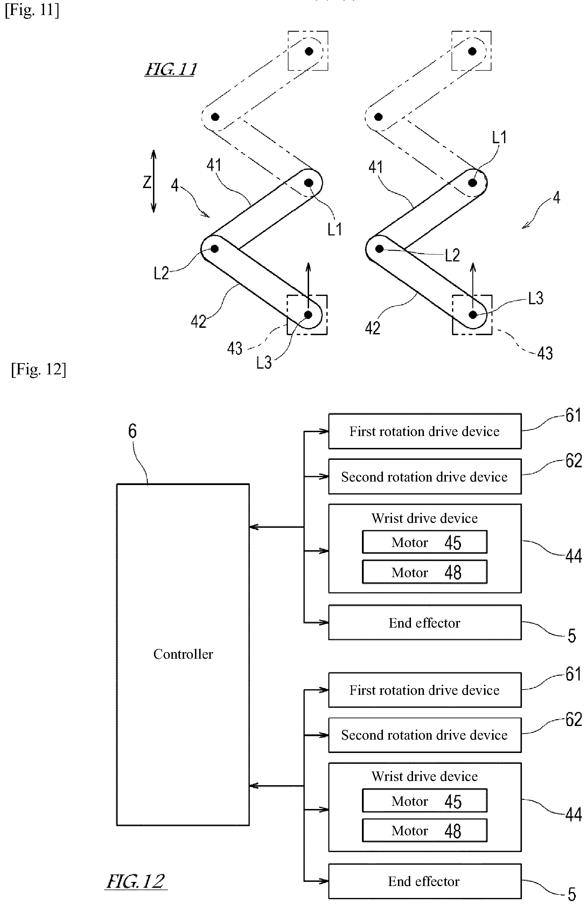

Further, for example, as shown in Fig. 11, when the dual arm robot 1 is viewed from the front, the pair of wrists 4 can have a mode in which straight lines connecting the first wrist axes L1 and the second wrist axes L2 of both the wrists 4 are parallel to each other. Such an embodiment is advantageous in that it is possible to perform an operation while avoiding a collision with an interference object in a scene where there is an interference object on one side of the dual arm robot 1.

Which of the illustrated modes the wrists 4 of both the arms 3 of the dual arm robot 1 adopt is determined according to the operation performed by the dual arm robot 1 and is taught to the dual arm robot 1 in advance, and the controller 6 moves the wrists 4 as taught.

### [Configuration of control system for dual arm robot 1]

Fig. 12 is a diagram showing the configuration of a control system of the dual arm robot 1. As shown in Fig. 12, the operations of the first rotation drive device 61, the second rotation drive device 62, and the wrist drive device 44 of each arm 3 and the operation of the end effector 5 are controlled by the controller 6.

The controller 6 is a so-called computer, and includes, for example, an arithmetic processing device (processor) such as a microcontroller, a CPU, an MPU, a PLC, a DSP, an ASIC, or an FPGA, and a storage device such as a ROM or a RAM (all not shown). The storage device stores a program executed by the arithmetic processing device, various kinds of fixed data, and the like. The storage device also stores data for controlling operations of the arm 3 and the wrist 4, data relating to the shape, dimensions, and operation of the end effector 5, and the like.

In the controller 6, processing for controlling the operations of the arm 3, the wrist 4, and the end effector 5 is performed by the arithmetic processing device reading and executing software such as a program stored in the storage device. The controller 6 may execute each process by centralized control by a single computer, or may execute each process by distributed control by cooperation of a plurality of computers.

The controller 6 operates the arm 3 and the wrist 4 so that a predetermined wrist control point moves to an arbitrary target position. The wrist control point is defined, for example, in the distal end side connecting body 43 or the interface 48a. The first rotation drive device 61 and the second rotation drive device 62 are provided with rotation position detectors that detect the rotation position of the output shaft of the motor provided, and the controller 6 obtains the position of a predetermined arm control point with respect to a predetermined reference point of the dual arm robot 1 based on the rotation position of the output shaft thus detected by these rotation position detectors. The arm control point is, for example, an intersection of the interface 48a, the joint surface of the end effector 5, and the fourth wrist axis L4.

Further, the wrist drive device 44 is provided with a rotation position detector (not shown) that detects the rotation positions of the output shafts of the motors 45 and 48 provided, and the controller 6 can obtain the position and posture of the wrist control point with respect to a predetermined wrist reference point based on the rotation of the output shaft detected by the rotation position detector. Then, the controller 6 can obtain the position of the wrist control point with respect to a predetermined reference point of the dual arm robot 1 from the position of the arm control point and the position and posture of the wrist control point thus obtained.

As described above, the wrist 4 according to the present embodiment is the wrist 4 that connects the robot arm 3 whose distal end moves within a predetermined plane and the end effector 5 and includes the proximal end side connecting body 40 connected to the robot arm 3; the first wrist link 41 coupled to the proximal end side connecting body 40 so as to be rotatable about the first wrist axis L1 defined in the proximal end side connecting body 40; the second wrist link 42 coupled to the first wrist link 41 so as to be rotatable about the second wrist axis L2 defined in the first wrist link 41; the distal end side connecting body 43 coupled to the second wrist link 42 so as to be rotatable about the third wrist axis L3 defined in the second wrist link 42 and connected to the end effector 5; and the wrist drive device 44 including the drive source (motor 45) that applies rotational power to the first wrist link 41 and the interlock device 46 that interlocks the second wrist link 42 and the distal end side connecting body 43 with the rotation of the first wrist link 41. The end effector 5 may be directly connected to the distal end side connecting body 43, or may be connected to the distal end side connecting body 43 via a shaft or a link further provided. In the present embodiment, the end effector 5 is connected to the distal end side connecting body 43 via the fourth wrist axis L4 which is a horizontal rotary axis (swivel axis).

The extending directions of the first wrist axis L1, the second wrist axis L2, and the third wrist axis L3 are parallel to the predetermined plane. The distance from the first wrist axis L1 to the second wrist axis L2 and the distance from the second wrist axis L2 to the third wrist axis L3 are equal. Further, the interlock device 46 is configured to cause the second wrist link 42 to rotate by -2α° about the second wrist axis L2 and cause the distal end side connecting body 43 to rotate by α° about the third wrist axis L3 when the first wrist link 41 rotates by arbitrary α° about the first wrist axis L1 from the state where the first wrist axis L1 and the third wrist axis L3 overlap each other.

Further, the dual arm robot 1 according to the above embodiment includes the pair of robot arms 3 whose distal ends move within a predetermined plane, the end effectors 5 provided for the respective robot arms 3, the wrists 4 that connect the robot arms 3 and the end effectors 5, and the controller 6 that controls the operations of the robot arms 3, the end effectors 5, and the wrists 4.

The robot arms 3 each include the first link 31 and the second link 32 having the proximal end connected to one of the upper side and the lower side of the first link 31 at the distal end of the first link 31. In the wrist 4, the motor 45, which is a drive source, is attached to the proximal end side connecting body 40 so that the motor 45 is located on the one of the upper side and the lower side with respect to the second link 32, thereby avoiding an interference between the drive source of the wrist 4 and the first link 31.

In the dual arm robot 1, for example, as shown in Fig. 10, the controller 6 may operate the wrists 4 so that the second wrist axes L2 of both the wrists 4 are located between the first wrist axes L1 of both the wrists 4. Further, for example, as shown in Fig. 9, the controller 6 may operate the wrists 4 so that the first wrist axes L1 of both the wrists 4 are located between the second wrist axes L2 of both the wrists 4. Further, for example, as shown in Fig. 11, the controller 6 may operate the wrists 4 so that the straight lines connecting the first wrist axes L1 and the second wrist axes L2 of both the wrists 4 are parallel to each other.

In the wrist 4 and the dual arm robot 1 having the above-described configuration, the position of the third wrist axis L3 in the direction orthogonal to a predetermined plane on which the distal end of the robot arm 3 (that is, the Z direction) moves in the same manner as the position in the Z direction of the distal end side connecting body 43 connected to the end effector 5. The third wrist axis L3 moves on a straight line that passes through the first wrist axis L1 and extends in the Z direction. The movement range of the third wrist axis L3 in the Z direction is at most four times the distance from the first wrist axis L1 to the second wrist axis L2 (that is, the first link length L). The link widths of the first wrist link 41 and the second wrist link 42 (dimensions in the direction orthogonal to the link lengths) can be easily made smaller by design than the dimensions in the direction parallel to the axial center of the lift shaft provided at the distal end of the conventional robot arm.

Therefore, in the wrist 4 of the robot arm 3 having the above-described configuration and the dual arm robot 1 including the wrists 4, it is possible to easily realize extension of the movement range of the end effector 5 with respect to the arm 3 in the Z direction while suppressing the dimension in the Z axis direction as compared to the conventional robot including the lift shaft at the distal end of the robot arm.

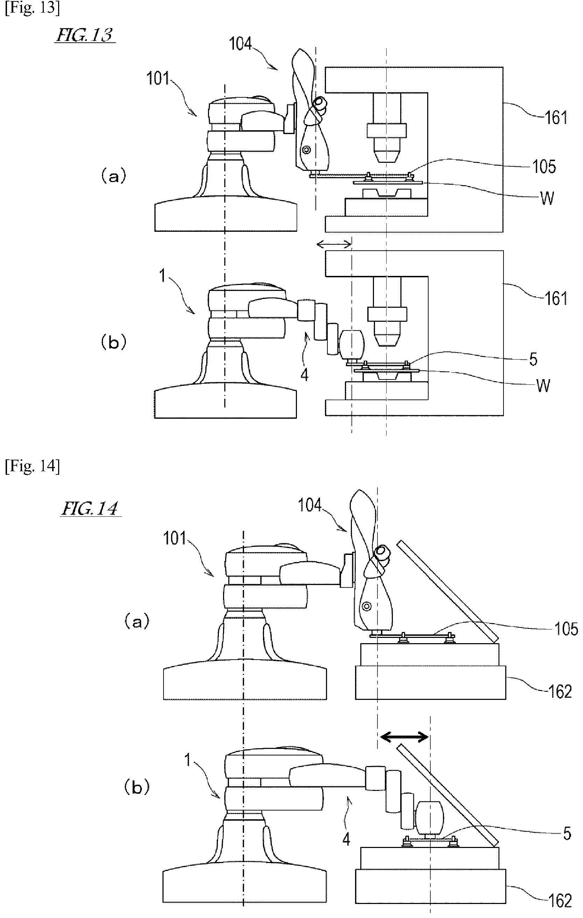

Figs. 13 and 14 are views for explaining advantages of the wrist 4 according to the embodiment with respect to a wrist 104 including a rail-type linear motion device. These drawings show a situation where a dual arm robot 101 according to the prior art including the wrists 104 including the rail-type linear motion devices and the dual arm robot 1 including the wrists 4 according to the present embodiment perform the same operation.

The robots 1 and 101 shown in Figs. 13 perform an operation of supplying a plate-like workpiece W to a press device 161. Each robot 1, 101 is equipped with a suction hand that sucks and holds the plate-like workpiece W as an end effector 5, 105. In the robot 101 according to the prior art, since the rail-type linear motion device extending in the vertical direction of the wrist 104 cannot be inserted into the press device 161, the movement distance necessary for carrying the workpiece W in the press device 161 to a predetermined press position is covered by the dimensions of the end effector 105. On the other hand, in the robot 1 according to the present embodiment, not only the end effector 5 but also the arm 3 and the wrist 4 can be inserted into the press device 161, so that the dimensions of the end effector 5 can be suppressed as compared to the robot 101.

In addition, the robots 1 and 101 shown in Fig. 14 perform an operation of supplying a semiconductor substrate to a semiconductor exposure machine 162. The semiconductor exposure machine 162 is provided with an openable/closable door on the stage. In the robot 101 according to the prior art, since the linear motion device of the wrist 104 cannot be inserted between the door and the stage, the movement distance necessary for carrying the semiconductor substrate to a predetermined position on the stage under the door is covered by the dimensions of the end effector 105. On the other hand, in the robot 1 according to the present embodiment, not only the end effector 5 but also the arm 3 and the wrist 4 can be inserted between the door and the stage, so that the dimensions of the end effector 5 can be suppressed as compared to the robot 101.

In the example of the operations shown in Figs. 13 and 14, the robot 1 according to the present embodiment can suppress the dimensions of the end effector 5 as compared with the robot 101 according to the prior art. Therefore, deflection and deformation of the end effector 5 can be suppressed and stable operation can be performed.

### [Modification]

The preferred embodiment of the present invention has been described above, but the present invention may include modifications in the specific structure and/or function details of the above embodiment without departing from the scope of the present invention as detailed in the claims. The configuration of the wrist 4 can be changed as follows, for example.

For example, in the above embodiment, the interlock device 46 of the wrist drive device 44 uses a gear train, but the interlock device 46 of the wrist drive device 44 may use a belt transmission mechanism including a pulley and a transmission belt.

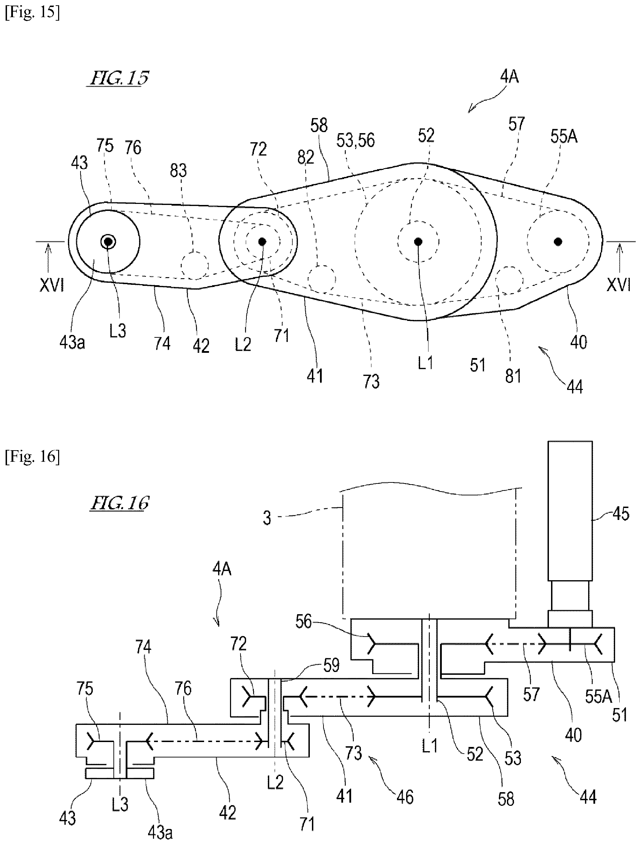

Fig. 15 is a front view showing a schematic configuration of a wrist 4A according to a first modification. Fig. 16 is a schematic view of the XVI-XVI cross section in Fig. 15. In the description of this modification, the same or similar members as those in the above-described embodiment are denoted by the same reference numerals in the drawings, and detailed description thereof is omitted.

As shown in Figs. 15 and 16, the wrist 4A according to the modification includes the proximal end side connecting body 40 connected to the distal end of the second link 32, the first wrist link 41 coupled to the proximal end side connecting body 40 so as to be rotatable about the first wrist axis L1, the second wrist link 42 coupled to the distal end of the first wrist link 41 so as to be rotatable about the second wrist axis L2, and the distal end side connecting body 43 coupled to the distal end of the second wrist link 42 so as to be rotatable about the third wrist axis L3. The end effector 5 is connected to the distal end side connecting body 43.

The proximal end side connecting body 40 includes a casing 51 that is fixed to the wrist connecting portion 33 of the second link 32. The motor 45 is attached to the casing 51. The output from the output shaft of the motor 45 is transmitted to a drive pulley 55A provided in the casing 51 via a gear mechanism (not shown) including a speed reducer.

The first rotation shaft 52 having the first wrist axis L1 as an axial center is fixed to the casing 51. In the casing 51, an input pulley 56 is loosely fitted to the first rotation shaft 52, and a boss of the input pulley 56 is rotatably supported on the casing 51. An endless transmission belt 57 is wound around the drive pulley 55A and the input pulley 56. A tension roller 81 for adjusting the tension of the transmission belt 57 is provided in the casing 51.

The casing 58 of the first wrist link 41 is fixed to the boss of the input pulley 56. A second rotation shaft 59 having the second wrist axis L2 as an axial center is fixed to the casing 58.

In the casing 58, a first pulley 53 is fixed to the first rotation shaft 52. In the casing 58, a second pulley 72 is loosely fitted to the second rotation shaft 59. An endless transmission belt 73 is wound around the first pulley 53 and the second pulley 72. A tension roller 82 for adjusting the tension of the transmission belt 73 is provided in the casing 58.

The boss of the second pulley 72 is rotatably supported on the second rotation shaft 59, and the casing 74 of the second wrist link 42 is fixed to the boss of the second pulley 72. The distal end side connecting body 43 is supported at the distal end of the casing 74 of the second wrist link 42 so as to be rotatable about the third wrist axis L3.

In the casing 74, a third pulley 71 is fixed to the second rotation shaft 59. In the casing 74, a fourth pulley 75 is fixed to the distal end side connecting body 43. An endless transmission belt 76 is wound around the third pulley 71 and the fourth pulley 75. A tension roller 83 for adjusting the tension of the transmission belt 76 is provided in the casing 74.

In the wrist 4A having the above configuration, when the drive pulley 55A is rotationally driven by the output of the motor 45, the rotational power is transmitted to the input pulley 56, and the first wrist link 41 including the input pulley 56 and the casing 58 rotates about the first wrist axis L1. Then, when the first wrist link 41 rotates about the first wrist axis L1, the second rotation shaft 59 revolves around the first wrist axis L1. Due to the revolution of the second rotation shaft 59, the transmission belt 73 goes around, and the second wrist link 42 including the second pulley 72 and the casing 74 rotates about the second wrist axis L2. Further, when the second wrist link 42 rotates about the second wrist axis L2, the distal end side connecting body 43 revolves around the second wrist axis L2. Due to the revolution of the distal end side connecting body 43, the transmission belt 76 goes around, and the distal end side connecting body 43 including the fourth pulley 75 rotates about the third wrist axis L3.

In the wrist 4A having the above-described configuration, the first link length that is a distance between the first wrist axis L1 and the second wrist axis L2 of the wrist 4 is substantially equal to the second link length that is a distance between the second wrist axis L2 and the third wrist axis L3. Furthermore, the pulley ratio, which is a ratio of the diameter of the first pulley 53 and the diameter of the second pulley 72, is 2 : 1, and the pulley ratio, which is a ratio of the diameter of the third pulley 71 and the diameter of the fourth pulley 75 is 1 : 2. Thus, the third wrist axis L3 moves on the straight line in the Z direction passing through the first wrist axis L1, in other words, when the first wrist link 41 rotates by α° about the first wrist axis L1 from the folded state, the second wrist link 42 rotates by -2α° about the second wrist axis L2, and the distal end side connecting body 43 rotates by α° about the third wrist axis L3.

### Reference Signs List

1 dual arm robot
2 base
3 robot arm
4, 4A wrist
5 end effector
6 controller
21 base shaft
31 first link
32 second link
33 wrist connecting portion
40 proximal end side connecting body
41 first wrist link
42 second wrist link
43 distal end side connecting body
44 wrist drive device
45 motor
46 interlock device
48 motor
49 bracket
50 flexible hose
51, 58, 74 casing
52, 59 rotation shaft
53, 55A, 71, 72, 75 pulley
57, 73, 76 transmission belt
61, 62 rotation drive device
81 to 83 tension roller
55, 89 to 96 gear
A1 first axis
A2 second axis
L1 first wrist axis
L2 second wrist axis
L3 third wrist axis
L4 fourth wrist axis

## Claims

1. A dual arm robot (1) comprising:
a pair of robot arms (3) whose distal ends move within a predetermined plane;
end effectors (5) provided for the respective robot arms (3);
wrists (4, 4A) that connect the robot arms (3) and the end effectors (5); and
a controller (6) that controls operations of the robot arms (3), the end effectors (5), and the wrists (4, 4A),
wherein each of the robot arms (3) includes a first link (31) and a second link (32) linked in order from a proximal end side of the robot arm (3),
wherein proximal ends of the first links (31) of the robot arms (3) are arranged side by side in a direction (Z) orthogonal to the predetermined plane,
wherein the first links (31) of the robot arms (3) are configured to rotate about an axis (A1),
wherein in one of the robot arms (3), the second link (32) is arranged on one side of the first link (31) in the direction (Z) orthogonal to the predetermined plane,
wherein in the other of the robot arms (3), the second link (32) is arranged on the other side of the first link (31) in the direction (Z) orthogonal to the predetermined plane,
wherein the wrist connecting portions (33), to which the wrists (4, 4A) are connected, are provided at distal ends of the second links (32),
wherein the wrist (4, 4A) comprises:
a proximal end side connecting body (40) connected to the robot arm (3);
a first wrist link (41) coupled to the proximal end side connecting body (40) so as to be rotatable about a first wrist axis (L1) defined in the proximal end side connecting body (40);
a second wrist link (42) coupled to the first wrist link (41) so as to be rotatable about a second wrist axis (L2) defined in the first wrist link (41);
a distal end side connecting body (43) coupled to the second wrist link (42) so as to be rotatable about a third wrist axis (L3) defined in the second wrist link (42) and connected to the end effector (5); and
a wrist drive device (44) including a drive source (45) that applies rotational power to the first wrist link (41) and an interlock device (46) that interlocks the second wrist link (42) and the distal end side connecting body (43) with rotation of the first wrist link (41),
wherein extending directions of the first wrist axis (L1), the second wrist axis (L2), and the third wrist axis (L3) are parallel to the predetermined plane,
wherein a distance from the first wrist axis (L1) to the second wrist axis (L2) and a distance from the second wrist axis (L2) to the third wrist axis (L3) are equal,
wherein the interlock device (46) causes the second wrist link (42) to rotate by -2α° about the second wrist axis (L2) and causes the distal end side connecting body (43) to rotate by α° about the third wrist axis (L3) when the first wrist link (41) rotates by arbitrary α° about the first wrist axis (L1) from a state where the first wrist axis (L1) and the third wrist axis (L3) overlap each other, and
wherein the controller (6) operates the wrists (4, 4A) so that the first wrist axes (L1) of both the wrists (4, 4A) are located between the second wrist axes (L2) of both the wrists (4, 4A), or so that the second wrist axes (L2) of both the wrists (4, 4A) are located between the first wrist axes (L1) of both the wrists (4, 4A).

2. The dual arm robot (1) according to claim 1,
wherein the robot arm (3) each include a first link (31) and a second link (32) having a proximal end connected to one of an upper side and a lower side of the first link (31) at a distal end of the first link (31), and
wherein the drive source (45) is attached to the proximal end side connecting body (40) of the wrist (4, 4A) so that the drive source (45) is located on the one of the upper side and the lower side with respect to the second link (32).

3. The dual arm robot (1) according to claim 1 or 2, further comprising:
a motor (48) having an output shaft and being held by the distal end side connecting body (43), the output shaft has a fourth wrist axis (L4) defined at its axial center; and
an interface (48a) configured to receive output from the output shaft of the motor (48) and connected to the end effector (5) via a gear mechanism including a speed reducer,
wherein an extending direction of the fourth wrist axis (L4) is orthogonal to the predetermined plane.

## Patentansprüche

1. Ein zweiarmiger Roboter (1), der Folgendes umfasst:
ein Paar Roboterarme (3), deren distale Enden sich innerhalb einer vorbestimmten Ebene bewegen;
End-Effektoren (5), die für die jeweiligen Roboterarme (3) bereitgestellt werden;
Handgelenke (4, 4A), die die Roboterarme (3) und die End-Effektoren (5) verbinden; und
eine Steuerung (6), die die Arbeitsabläufe bzw. Betriebsvorgänge (*operations*) der Roboterarme (3), der Endeffektoren (5) und der Handgelenke (4, 4A) steuert,
wobei jeder der Roboterarme (3) ein erstes Verbindungsglied (31) und ein zweites Verbindungsglied (32) beinhaltet, die in der genannten Reihenfolge ausgehend von einer proximalen Endseite des Roboterarms (3) verbunden sind,
wobei die proximalen Enden der ersten Verbindungsglieder (31) der Roboterarme (3) nebeneinander, orthogonal zur vorbestimmten Ebene, in einer Richtung (Z) angeordnet sind,
wobei die ersten Verbindungsglieder (31) der Roboterarme (3) konfiguriert sind, um sich um eine Achse (A1) zu drehen,
wobei in einem von den Roboterarmen (3) das zweite Verbindungsglied (32) auf einer Seite des ersten Verbindungsglieds (31) in der Richtung (Z), orthogonal zur vorbestimmten Ebene, angeordnet ist,
wobei im anderen von den Roboterarmen (3) das zweite Verbindungsglied (32) auf der anderen Seite des ersten Verbindungsglieds (31) in Richtung (Z), orthogonal zur vorbestimmten Ebene, angeordnet ist,
wobei die Handgelenk-Verbindungsabschnitte (33), mit denen die Handgelenke (4, 4A) verbunden sind, an den distalen Enden der zweiten Verbindungsglieder (32) vorgesehen sind,
wobei das Handgelenk (4, 4A) Folgendes umfasst:
einen proximal endseitigen Verbindungskörper (40), der mit dem Roboterarm (3) verbunden ist;
ein erstes Handgelenk-Verbindungsglied (41), das mit dem proximal endseitigen Verbindungskörper (40) gekoppelt ist, sodass es um eine erste Handgelenkachse (L1) drehbar ist, die im proximal endseitigen Verbindungskörper (40) definiert ist;
ein zweites Handgelenk-Verbindungsglied (42), das mit dem ersten Handgelenk-Verbindungsglied (41) gekoppelt ist, sodass es um eine zweite Handgelenkachse (L2) drehbar ist, die im ersten Handgelenk-Verbindungsglied (41) definiert ist;
ein distal endseitiger Verbindungskörper (43), der mit dem zweiten Handgelenk-Verbindungsglied (42) gekoppelt ist, damit er um eine dritte Handgelenkachse (L3) herum drehbar ist, die im zweiten Handgelenk-Verbindungsglied (42) definiert ist, und mit dem End-Effektor (5) verbunden ist; und
eine Handgelenk-Antriebsvorrichtung (44), die eine Antriebsquelle (45), die eine Drehkraft auf das erste Handgelenk-Verbindungsglied (41) ausübt, und eine Verriegelungsvorrichtung (46) beinhaltet, die das zweite Handgelenk-Verbindungsglied (42) und den distal endseitigen Verbindungskörper (43) bei einer Drehung des ersten Handgelenk-Verbindungsglieds (41) verriegelt,
wobei die Ausdehnungsrichtungen der ersten Handgelenkachse (L1), der zweiten Handgelenkachse (L2) und der dritten Handgelenkachse (L3) parallel zur vorbestimmten Ebene sind,
wobei ein Abstand von der ersten Handgelenkachse (L1) zur zweiten Handgelenkachse (L2) und ein Abstand von der zweiten Handgelenkachse (L2) zur dritten Handgelenkachse (L3) gleich sind,
wobei die Verriegelungsvorrichtung (46) bewirkt, dass sich das zweite Handgelenk-Verbindungsglied (42) um -2α° um die zweite Handgelenkachse (L2) dreht, und bewirkt, dass sich der distal endseitige Verbindungskörper (43) um α° um die dritte Handgelenkachse (L3) dreht, wenn sich das erste Handgelenk-Verbindungsglied (41) um einen beliebigen Winkel α° um die erste Handgelenkachse (L1) aus einem Zustand heraus dreht, in dem sich die erste Handgelenkachse (L1) und die dritte Handgelenkachse (L3) überlappen, und
wobei die Steuerung (6) die Handgelenke (4, 4A) so betätigt, dass die ersten Handgelenkachsen (L1) beider Handgelenke (4, 4A) zwischen den zweiten Handgelenkachsen (L2) beider Handgelenke oder so, dass sich die zweiten Handgelenkachsen (L2) beider Handgelenke (4, 4A) zwischen den ersten Handgelenkachsen (L1) beider Handgelenke (4, 4A) befinden.

2. Der zweiarmige Roboter (1) nach Anspruch 1,
wobei der Roboterarm (3) jeweils ein erstes Verbindungsglied (31) und ein zweites Verbindungsglied (32) beinhaltet, die ein proximales Ende aufweisen, das mit einer von einer oberen Seite und einer unteren Seite des ersten Verbindungsglieds (31) an einem distalen Ende des ersten Verbindungsglieds (31) verbunden ist, und
wobei die Antriebsquelle (45) am proximal endseitigen Verbindungskörper (40) des Handgelenks (4, 4A) angebracht ist, sodass sich die Antriebsquelle (45) relativ zum zweiten Verbindungsglied (32) auf einem von der oberen Seite und der unteren Seite befindet.

3. Der zweiarmige Roboter (1) nach Anspruch 1 oder 2, der ferner Folgendes umfasst:
einen Motor (48) mit einer Abtriebswelle, der vom distal endseitigen Verbindungskörper (43) gehalten wird, wobei die Abtriebswelle eine vierte Handgelenkachse (L4) aufweist, die an ihrem axialen Mittelpunkt definiert ist; und
eine Schnittstelle (48a), die konfiguriert ist, um die Ausgabe von der Abtriebswelle des Motors (48) zu empfangen, und die über einen Getriebemechanismus, der ein Untersetzungsgetriebe enthält, mit dem Endeffektor (5) verbunden ist,
wobei eine Ausdehnungsrichtung der vierten Handgelenkachse (L4) orthogonal zur vorbestimmten Ebene ist.

## Revendications

1. Un robot à deux bras (1) comprenant :
une paire de bras de robot (3) dont les extrémités distales se déplacent dans un plan prédéterminé ;
des effecteurs d'extrémité (5) fournis pour les bras de robot (3) respectifs ;
des poignets (4, 4A) qui relient les bras de robot (3) et les effecteurs d'extrémité (5) ; et
un dispositif de commande (6) qui contrôle les opérations des bras de robot (3), des effecteurs d'extrémité (5) et des poignets (4, 4A),
sachant que chacun des bras de robot (3) inclut un premier élément de liaison (*link*) (31) et un deuxième élément de liaison (32) reliés dans l'ordre à partir d'un côté d'extrémité proximale du bras de robot (3),
sachant que des extrémités proximales des premiers éléments de liaison (31) des bras de robot (3) sont agencées côte à côte dans une direction (Z) orthogonale au plan prédéterminé,
sachant que les premiers éléments de liaison (31) des bras de robot (3) sont configurés pour tourner autour d'un axe (A1),
sachant que dans l'un des bras de robot (3), le deuxième élément de liaison (32) est agencé sur un côté du premier élément de liaison (31) dans la direction (Z) orthogonale au plan prédéterminé,
sachant que dans l'autre des bras de robot (3), le deuxième élément de liaison (32) est agencé sur l'autre côté du premier élément de liaison (31) dans la direction (Z) orthogonale au plan prédéterminé,
sachant que les portions de connexion de poignet (33), auxquelles les poignets (4, 4A) sont connectés, sont fournies à des extrémités distales des deuxièmes éléments de liaison (32),
sachant que le poignet (4, 4A) comprend :
un corps de connexion côté extrémité proximale (40) relié au bras du robot (3) ;
un premier élément de liaison de poignet (41) couplé au corps de connexion côté extrémité proximale (40) de manière à pouvoir tourner autour d'un premier axe de poignet (L1) défini dans le corps de connexion côté extrémité proximale (40) ;
un deuxième élément de liaison de poignet (42) couplé au premier élément de liaison de poignet (41) de manière à pouvoir tourner autour d'un deuxième axe de poignet (L2) défini dans le premier élément de liaison de poignet (41) ;
un corps de connexion côté extrémité distale (43) couplé au deuxième élément de liaison de poignet (42) de manière à pouvoir tourner autour d'un troisième axe de poignet (L3) défini dans le deuxième élément de liaison de poignet (42), et connecté à l'effecteur d'extrémité (5) ; et
un dispositif d'entraînement de poignet (44) incluant une source d'entraînement (45) qui applique une puissance de rotation au premier élément de liaison de poignet (41), et un dispositif de verrouillage (46) qui verrouille le deuxième élément de liaison de poignet (42) et le corps de connexion côté extrémité distale (43) avec la rotation du premier élément de liaison du poignet (41),
sachant que les directions d'extension du premier axe de poignet (L1), du deuxième axe de poignet (L2) et du troisième axe de poignet (L3) sont parallèles au plan prédéterminé,
sachant qu'une distance depuis le premier axe de poignet (L1) au deuxième axe de poignet (L2) et une distance depuis le deuxième axe de poignet (L2) au troisième axe de poignet (L3) sont égales,
sachant que le dispositif de verrouillage (46) fait tourner le deuxième élément de liaison de poignet (42) de -2α° autour du deuxième axe de poignet (L2) et fait tourner le corps de connexion côté extrémité distale (43) de α° autour du troisième axe de poignet (L3) lorsque le premier élément de liaison de poignet (41) tourne arbitrairement de α° autour du premier axe de poignet (L1) à partir d'un état où le premier axe de poignet (L1) et le troisième axe de poignet (L3) se chevauchent l'un l'autre, et
sachant que le dispositif de commande (6) exploite les poignets (4, 4A) de manière que les premiers axes de poignet (L1) des deux poignets (4, 4A) soient situés entre les deuxièmes axes de poignet (L2) des deux poignets (4, 4A), ou de manière que les deuxièmes axes de poignet (L2) des deux poignets (4, 4A) soient situés entre les premiers axes de poignet (L1) des deux poignets (4, 4A).

2. Le robot à deux bras (1) d'après la revendication 1,
sachant que le bras de robot (3) incluent chacun un premier élément de liaison (31) et un deuxième élément de liaison (32) présentant une extrémité proximale connectée à l'un parmi un côté supérieur et un côté inférieur du premier élément de liaison (31) à une extrémité distale du premier élément de liaison (31), et
sachant que la source d'entraînement (45) est attachée au corps de connexion côté extrémité proximale (40) du poignet (4, 4A) de manière que la source d'entraînement (45) soit située sur l'un parmi le côté supérieur et le côté inférieur par rapport au deuxième élément de liaison (32).

3. Le robot à deux bras (1) d'après la revendication 1 ou 2, comprenant en outre :
un moteur (48) présentant un arbre de sortie et étant maintenu par le corps de connexion côté extrémité distale (43), l'arbre de sortie présente un quatrième axe de poignet (L4) défini au niveau de son centre axial ; et
une interface (48a) configurée pour recevoir la sortie de l'arbre de sortie du moteur (48) et étant connectée à l'effecteur d'extrémité (5) via un mécanisme d'engrenage incluant un réducteur de vitesse,
sachant qu'une direction d'extension du quatrième axe de poignet (L4) est orthogonale par rapport au plan prédéterminé.
